(19) Europäisches Patentamt
European Patent Office
Office européen des brevets

(11) **EP 4 510 048 A1**

(12) **EUROPEAN PATENT APPLICATION**
published in accordance with Art. 153(4) EPC

(43) Date of publication:
**19.02.2025 Bulletin 2025/08**

(21) Application number: **22942666.3**

(22) Date of filing: **18.05.2022**

(51) International Patent Classification (IPC):
**G06N 20/00** (2019.01)   **G06N 99/00** (2019.01)

(52) Cooperative Patent Classification (CPC):
**G06N 20/00; G06N 99/00**

(86) International application number:
**PCT/JP2022/020680**

(87) International publication number:
**WO 2023/223461 (23.11.2023 Gazette 2023/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **NORIMATSU Yoshiyuki
Tokyo 100-8310 (JP)**

(74) Representative: **Pfenning, Meinig & Partner mbB
Patent- und Rechtsanwälte
An der Frauenkirche 20
01067 Dresden (DE)**

(54) **CAUSAL ASSOCIATION ESTIMATION DEVICE, CAUSAL ASSOCIATION ESTIMATION METHOD, AND CAUSAL ASSOCIATION ESTIMATION PROGRAM**

(57)     A causal relationship inference device (100) includes a data acquisition unit (10) to acquire learning data including a set $(X(0 . t))$ of time-series data of a plurality of state variables and a set $(Y(0 . t))$ of time-series data of a plurality of observation variables, a calculation unit (22) to calculate a causal relationship parameter $(\theta)$ indicating a causal relationship between the time-series data of the plurality of state variables and the time-series data of the plurality of observation variables, to calculate a variance-covariance matrix $K(X, X')$ of a Gaussian process from the learning data and the causal relationship parameter $(\theta)$, and to represent the causal relationship parameter $(\theta)$ by a multi-task Gaussian process model, and an optimization unit (24) to calculate an optimization function based on the variance-covariance matrix and to update the causal relationship parameter $(\theta)$ based on the optimization function.

FIG. 1

TIME-SERIES DATA DB — 12

DATA ACQUISITION UNIT
INPUT UNIT — 14
PREPROCESSING UNIT — 16
10

LEARNING UNIT — 20
CALCULATION UNIT — 22
OPTIMIZATION UNIT — 24

100

CAUSAL RELATIONSHIP PARAMETER DB — 26

EP 4 510 048 A1

**Description**

TECHNICAL FIELD

The present disclosure relates to a causal relationship inference device, a causal relationship inference method and a causal relationship inference program.

BACKGROUND ART

For example, Patent Reference 1 discloses a device that calculates a maximum mean discrepancy (MMD) as a value at which the difference between kernel means of bivariate time-series data (referred to also as "two-dimensional time-series data") is the maximum and clarifies a causal relationship between variates by means of supervised learning.

PRIOR ART REFERENCE

PATENT REFERENCE

Patent Reference 1: Japanese Patent Application Publication No. 2017-228256.

NON-PATENT REFERENCE

Non-patent Reference 1: Jack M. Wang, David J. Fleet, and Aaron Hertzmann, "Gaussian Process Dynamical Models", NIPS '05: Proceedings of the 18th International Conference on Neural Information Processing Systems, December 2005, pp.1441-1448.
Non-patent Reference 2: Edwin V. Bonilla, Kian Ming A. Chai, and Christopher K.I. Williams, "Multi-task Gaussian Process Prediction", Proceedings of the Advances in Neural Information Processing Systems 20 (2008).

SUMMARY OF THE INVENTION

PROBLEM TO BE SOLVED BY THE INVENTION

However, the device in the Patent Reference 1 has a problem in that the device is incapable of inferring the causal relationship between time-series data of an arbitrary number of variates (e.g., three or more variates).
An object of the present disclosure, which has been made to resolve the above-described problem, is to provide a causal relationship inference device, an inference method and an inference program that make it possible to infer the causal relationship between time-series data of an arbitrary number of variates.

MEANS FOR SOLVING THE PROBLEM

A causal relationship inference device in the present disclosure includes a data acquisition unit to acquire learning data including a set of time-series data of a plurality of state variables and a set of time-series data of a plurality of observation variables, a calculation unit to calculate a causal relationship parameter indicating a causal relationship between the time-series data of the plurality of state variables and the time-series data of the plurality of observation variables, to calculate a variance-covariance matrix of a Gaussian process from the learning data and the causal relationship parameter, and to represent the causal relationship parameter by a multi-task Gaussian process model, and an optimization unit to calculate an optimization function based on the variance-covariance matrix and to update the causal relationship parameter based on the optimization function.
Another causal relationship inference device in the present disclosure includes a causal graph construction unit to read out a causal relationship parameter, indicating a causal relationship between time-series data of a plurality of state variables and time-series data of a plurality of observation variables in regard to each layer, from a causal relationship parameter database and to rearrange the time-series data of the plurality of state variables and the time-series data of the plurality of observation variables in regard to each layer based on the causal relationship parameter, a data acquisition unit to acquire verification data including a set of time-series data of a plurality of state variables and a set of time-series data of a plurality of observation variables, and a causal graph verification unit to perform one or both of verification of Granger causality by use of the verification data and verification of a spurious correlation by use of the verification data on the rearranged time-series data of the plurality of state variables and the rearranged time-series data of the plurality of observation variables.

EFFECT OF THE INVENTION

According to the present disclosure, the inference of the causal relationship between time-series data of an arbitrary number of variates can be made possible.

BRIEF DESCRIPTION OF THE DRAWINGS

Fig. 1 is a block diagram showing the configuration of a causal relationship inference device according to a first embodiment.
Fig. 2 is a diagram showing an example of the hardware configuration of the causal relationship inference device in Fig. 1.
Fig. 3 is a block diagram showing the configuration of a preprocessing unit of a data acquisition unit in Fig. 1.
Fig. 4 is a diagram showing an example of time information before and after dimension compression by the preprocessing unit of the data acquisition unit in Fig. 1.
Fig. 5 is a diagram showing an example of angle information before and after dimension expansion by the preprocessing unit of the data acquisition unit in Fig. 1.
Fig. 6 is a diagram showing an example of a process executed by a calculation unit of a learning unit in Fig. 1.
Fig. 7 is a diagram showing an example of a process executed by a time-shift operator of the calculation unit of the learning unit in Fig. 1.
Fig. 8 is a diagram showing examples of an initial value and the number of parameters regarding the causal relationship parameter generated by the calculation unit of the learning unit in Fig. 1 in tabular form.
Fig. 9 is a flowchart showing the operation of the causal relationship inference device in Fig. 1.
Fig. 10 is a block diagram showing the configuration of a causal relationship inference device according to a second embodiment.
Fig. 11 is a diagram showing an example of the hardware configuration of the causal relationship inference device in Fig. 10.
Fig. 12 is a diagram showing a causal graph construction process executed by a causal graph construction unit of a construction unit in Fig. 10.
Figs. 13A and 13B are diagrams showing an example of a rearrangement process for state information and observation information executed by the causal graph construction unit of the construction unit in Fig. 10.
Figs. 14A and 14B are diagrams showing an example of a verification process executed by a causal graph verification unit of the construction unit in Fig. 10.
Figs. 15A and 15B are diagrams showing other examples of the verification process executed by the causal graph verification unit of the construction unit in Fig. 10.
Fig. 16 is a flowchart showing the operation of the causal relationship inference device in Fig. 10.
Figs. 17A and 17B are diagrams showing a process of predicting time-series data not observed by the causal relationship inference device in Fig. 10 due to a relationship between time-series data.
Fig. 18 is a diagram showing operation when the causal relationship inference device in Fig. 10 uses a model that has learned change points or failures in sensor data by introducing a change point kernel.

MODE FOR CARRYING OUT THE INVENTION

A causal relationship inference device, a causal relationship inference method and a causal relationship inference program according to each embodiment will be described below with reference to the drawings. The following embodiments are just examples and it is possible to appropriately combine embodiments and appropriately modify each embodiment.
The causal relationship inference device according to each embodiment is, for example, a device for inferring a causal relationship between time-series data (X) and time-series data (Y) like "X → Y", that is, "the time-series data (X) is cause and the time-series data (Y) is result" when multidimensional time-series data made up of the time-series data (X) regarding various economic indices (e.g., exchange rate between yen and dollar, oil price, public investment, etc.) and the time-series data (Y) of the stock price of a company is given as a sample. The time-series data (X) is referred to as a state variable, while the time-series data (Y) is referred to as an observation variable. Further, the state variable is referred to also as an explanatory variable or a latent variable. The observation variable is referred to also as an objective variable, a dependent variable or an explained variable. Each of the time-series data (X) and the time-series data (Y) does not need to be one-dimensional time-series data but can also be multidimensional time-series data (i.e., multivariate time-series data) of two or more variates. Furthermore, the time-series data (X) as the state variable can also be an observation variable of time-series data (X') of a different state variable. Moreover, the time-series data (Y) as the observation variable can also be a state variable of time-series data (Y') of a different observation variable.

The causal relationship inference device according to a first embodiment is a machine learning device that generates a learned model (including a causal relationship parameter) from learning time-series data. The causal relationship inference device according to a second embodiment is a device that constructs a causal graph from the causal relationship parameter of the generated learned model (e.g., the causal relationship parameter generated by the causal relationship inference device according to the first embodiment) and verification time-series data and outputs the causal graph. The causal relationship inference device according to the second embodiment, while being a device separate from the causal relationship inference device according to the first embodiment, may also have the configuration of the causal relationship inference device according to the first embodiment.

A learning unit of the causal relationship inference device according to the first embodiment models multidimensional time-series data, including a correlation between data series and lag information regarding a lag between the data series, by using a Gaussian process model, for example. As the Gaussian process model, a publicly known method such as a Gaussian Process Dynamical Model (GPDM) or a Multi-Task Gaussian Process (MTGP) model can be used. The GPDM is described in Non-patent Reference 1, for example. The MTGP model is described in Non-patent Reference 2, for example.

By using the GPDM, it is possible to express time evolution of multidimensional time-series data in a nonlinear state. By using the MTGP model, a correlation between a plurality of state functions and a plurality of observation functions and a lag between the plurality of state functions and the plurality of observation functions can be expressed as a causal relationship parameter of a kernel function. The causal relationship inference device according to the first embodiment stores the causal relationship obtained by the learning in a causal relationship parameter database (causal relationship parameter DB) in a storage device as a causal relationship parameter. The causal relationship inference device according to the second embodiment constructs the causal graph from the causal relationship parameter stored in the causal relationship parameter DB, verifies the causal graph by using the verification time-series data stored in a time-series data DB, and outputs the verified causal graph.

(1) First Embodiment

(1-1) Configuration

(1-1-1) Causal Relationship Inference Device 100

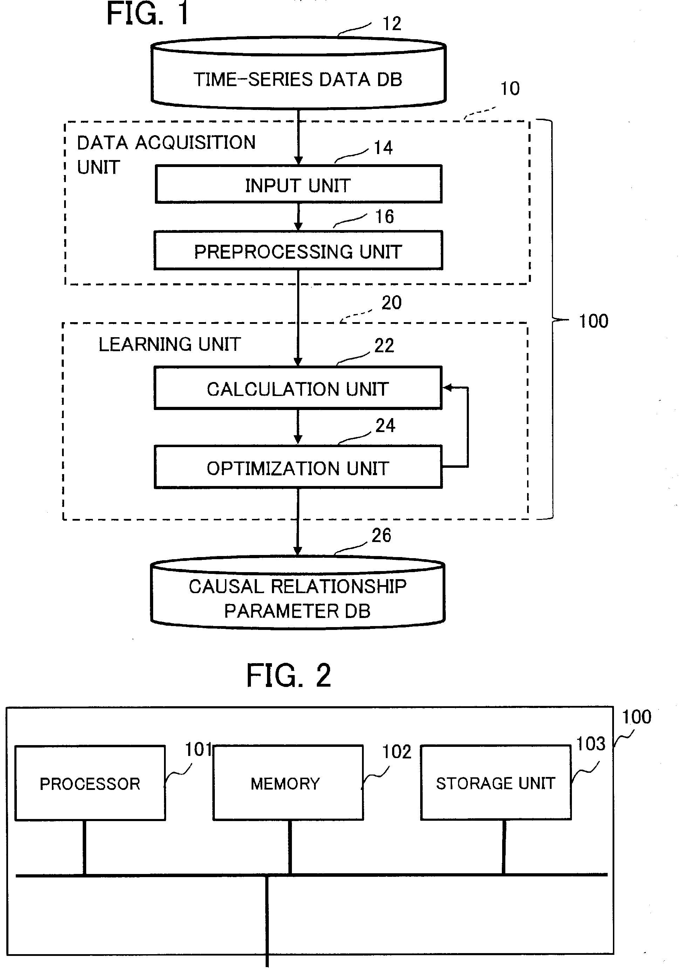

Fig. 1 is a block diagram showing the configuration of a causal relationship inference device 100 according to the first embodiment. The causal relationship inference device 100 is a device capable of executing a causal relationship inference method (i.e., a learning method) according to the first embodiment. As shown in Fig. 1, the causal relationship inference device 100 includes a data acquisition unit 10 and a learning unit 20. The causal relationship inference device 100 is a computer, for example. The causal relationship parameter obtained by the learning is stored in a causal relationship parameter DB 26 in a storage unit. While the causal relationship parameter DB 26 may be stored in the storage unit (storage unit 103 in Fig. 2 which will be explained later) as a part of the causal relationship inference device 100, the causal relationship parameter DB 26 may also be stored in a storage unit of an external device (e.g., server on a network capable of communicating with the causal relationship inference device 100) separate from the causal relationship inference device 100.

The causal relationship inference device 100 acquires learning data including a set X (0 : t) of time-series data of a plurality of state variables and a set Y (0 : t) of time-series data of a plurality of observation variables, calculates a causal relationship parameter $\theta$ indicating a causal relationship between the time-series data of the plurality of state variables and the time-series data of the plurality of observation variables, calculates a variance-covariance matrix K (X, X') of a Gaussian process from the learning data and the causal relationship parameter $\theta$, represents the causal relationship parameter $\theta$ by the multi-task Gaussian process model, calculates an optimization function based on the variance-covariance matrix, and updates the causal relationship parameter $\theta$ based on the optimization function. The causal relationship parameter $\theta$ includes a correlation coefficient indicating a correlation between the time-series data of the plurality of state variables and the time-series data of the plurality of observation variables and a lag coefficient indicating a lag between the time-series data of the plurality of state variables and the time-series data of the plurality of observation variables, and the causal relationship inference device 100 represents the correlation by a linear correlation of LMC (Linear Model of Coregion) kernels of the aforementioned multi-task Gaussian process model.

The data acquisition unit 10 includes an input unit 14 that receives time-series data inputted from the time-series data DB 12 and outputs the time-series data to a preprocessing unit 16 and the preprocessing unit 16 that performs preprocessing on the time-series data outputted from the input unit 14 and outputs the preprocessed time-series data to the learning unit 20. While the time-series data DB 12 may be stored in the storage unit (the storage unit 103 in Fig. 2 which will be explained later) as part of the causal relationship inference device 100, the time-series data DB 12 may also be stored in a storage unit of an external device (e.g., server on a network capable of communicating with the causal relationship inference device 100) separate from the causal relationship inference device 100.

The learning unit 20 includes a calculation unit 22 and an optimization unit 24. The calculation unit 22 initializes the causal relationship parameter and calculates the variance-covariance matrix. The optimization unit 24 calculates the optimization function based on the variance-covariance matrix and updates the causal relationship parameter based on the optimization function. Details of the components will be described later.

Fig. 2 is a diagram showing an example of the hardware configuration of the causal relationship inference device 100. The causal relationship inference device 100 includes a processor 101, a memory 102, and the storage unit 103 as a nonvolatile storage device. The causal relationship inference device 100 may include a communication unit that executes communication with other devices via a network. The processor 101 is a CPU (Central Processing Unit) or the like. The memory 102 is, for example, a volatile semiconductor memory such as a RAM (Random Access Memory). The storage unit 103 is a storage device such as a hard disk drive (HDD) or a solid state drive (SSD). The storage unit 103 stores information (e.g., various databases) and a program.

Functions of the causal relationship inference device 100 are implemented by processing circuitry. The processing circuitry can be either dedicated hardware or the processor 101 executing a program stored in the memory 102. The processor 101 can be any one of a processing device, an arithmetic device, a microprocessor, a microcomputer and a DSP (Digital Signal Processor).

In the case where the processing circuitry is dedicated hardware, the processing circuitry is, for example, a single circuit, a combined circuit, a programmed processor, an ASIC (Application Specific Integrated Circuit), an FPGA (Field-Programmable Gate Array) or a combination of some of these circuits.

In the case where the processing circuitry is the processor 101, the causal relationship inference program (i.e., learning program) according to the first embodiment is implemented by software, firmware, or a combination of software and firmware. The software and the firmware are described as programs and stored in the memory 102. The processor 101 is capable of implementing the functions of the units shown in Fig. 1 by reading out and executing the program stored in the memory 102. The causal relationship inference program is provided by downloading via a network or through a record medium (i.e., computer-readable storage medium) recording information such as an optical disc, and installed in the causal relationship inference device 100. It is also possible to implement part of the causal relationship inference device 100 by dedicated hardware and other part of the causal relationship inference device 100 by software or firmware. As above, the processing circuitry is capable of implementing the functions of the functional blocks shown in Fig. 1 by hardware, software, firmware or a combination of some of these means.

(1-1-2) Input Unit 14

The input unit 14 of the data acquisition unit 10 acquires the set X (0 : t) of time-series data of the state variables (i.e., a plurality of items of time-series data) and the set Y (0 : t) of time-series data of the observation variables (i.e., a plurality of items of time-series data) from the time-series data DB 12 and outputs these sets X and Y of time-series data to the preprocessing unit 16.

Specifically, the input unit 14 selects time-series data $x_1(0 : t)$, $x_2(0 : t)$, ..., $x_Q(0 : t)$ of Q state variables (Q is a positive integer) and time-series data $y_1(0 : t)$, $y_2(0 : t)$, $\cdots$, $y_D(0 : t)$ of D observation variables (D is a positive integer), which are considered to be in the relationship of cause and result, from the time-series data DB 12. This means that the time-series data of the D observation variables were observed due to the time-series data of the Q state variables as the cause. While each item of time-series data $y_d(0 : t)$ (d = 1, 2, ..., D) of an observation variable needs to be one-dimensional time-series data, each item of time-series data $X_q(0 : t)$ (q = 1, 2, ..., Q) of a state variable does not need to be one-dimensional time-series data but can also be multidimensional time-series data. For example, when time-series data of an angle $\alpha$ being state information is selected as the time-series data $X_q(0 : t)$ of a state variable and the angle $\alpha$ being state information is dimension-expanded into time-series data of $\sin\alpha$ and time-series data of $\cos\alpha$ as will be described later, it is also possible to transform ($\sin\alpha$, $\cos\alpha$) as a set of the time-series data of $\sin\alpha$ and the time-series data of $\cos\alpha$ to one two-dimensional time-series data, without handling each of the time-series data of $\sin\alpha$ and the time-series data of $\cos\alpha$ as a state variable of one-dimensional time-series data.

Subsequently, the input unit 14 acquires a set X(0 : t) of time-series data of state variables and a set Y(0 : t) of time-series data of observation variables each having a length T (T is a positive integer) from the time-series data of the Q state variables and the time-series data of the D observation variables selected from the time-series data DB 12, and passes on these sets of time-series data to the preprocessing unit 16. In X(0 : t) and Y(0 : t), the expression 0 : t in the parentheses represents time-series data from time 0 to time t. However, the time-series data does not need to start with 0; it is also possible to select time-series data at an arbitrary place and having the length T from the time-series data stored in the time-series data DB 12.

X(0 : t) represents a set of time-series data of state variables. That is, X(0 : t) = {$x_1$(0 : t), $x_2$(0 : t), ..., $x_Q$(0 : t) } .

Y(0 : t) represents a set of time-series data of observation variables. That is, Y(0 : t) = {yi (0 : t), $y_2$(0 : t), ..., $y_D$(0 : t)} .

Incidentally, $x_q$(0 : t) represents time-series data of a state variable of a state q. Further, $y_d$(0 : t) represents time-series data of an observation variable in a d-th dimension.

(1-1-3) Preprocessing Unit 16

The preprocessing unit 16 of the data acquisition unit 10 acquires the set X(0 : t) of time-series data of state variables and the set Y(0 : t) of time-series data of observation variables outputted from the input unit 14, performs the preprocessing on these sets of time-series data, and outputs the preprocessed set X(0 : t) of time-series data of state variables and the preprocessed set Y(0 : t) of time-series data of observation variables to the calculation unit 22 of the learning unit 20.

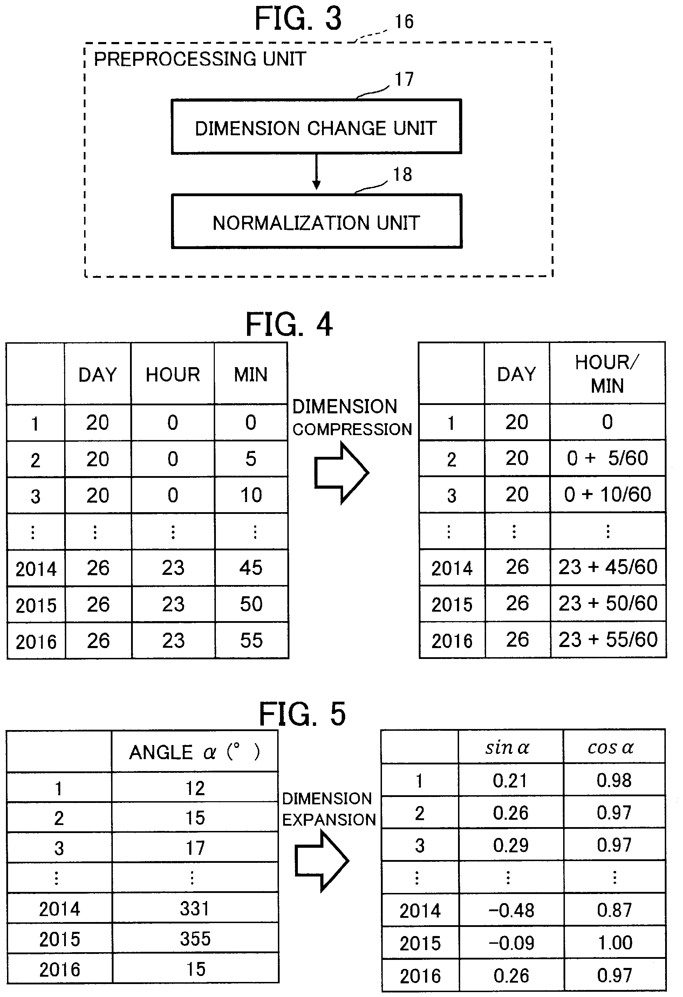

Fig. 3 is a block diagram showing the configuration of the preprocessing unit 16 of the data acquisition unit 10. As shown in Fig. 3, the preprocessing unit 16 includes a dimension change unit 17 and a normalization unit 18.

The dimension change unit 17 performs an appropriate dimension reduction process (i.e., dimension compression process) or dimension expansion process on each item of state information for time-series data $x_q$(0 : t) of state information for which a dimension change is necessary. Cases where the dimension change of the time-series data $x_q$(0 : t) of state information is necessary include, for example, cases where the state information is information having periodicity such as time information or angle information, cases where the length of a diagonal line of a rectangle is more effective than the length of each side of the rectangle, and so forth. Examples of the dimension compression process and the dimension expansion process will be shown below. It is also possible to execute a process opposite to each of the following examples.

Fig. 4 is a diagram showing an example of time information before (table on the left side) and after (table on the right side) the dimension compression by the dimension change unit 17 of the preprocessing unit 16. As shown in Fig. 4, the time information exhibits a 24-hour periodicity when the observation data have a daily periodicity. Therefore, the time information can be compressed from three-dimensional time-series data to two-dimensional time-series data by integrating two items of information, "minute" and "hour", and compressing them into one item of information, "hour and minute".

Fig. 5 is a diagram showing an example of angle information before and after the dimension expansion by the dimension change unit 17 of the preprocessing unit 16. As shown in Fig. 5, the angle information can be expanded from one-dimensional time-series data to two-dimensional time-series data by expanding "angle $\alpha°$" as one item of information into "$\sin\alpha$" and "$\cos\alpha$" as a combination of two items of information. It is also possible for the dimension change unit 17 to employ a different dimension compression method (e.g., principal component analysis or the like) or a different dimension expansion method.

The normalization unit 18 normalizes the set X(0 : t) of time-series data of state variables after undergoing the dimension change and the set Y(0 : t) of time-series data of observation variables after undergoing the dimension change so that the mean is 0 and the variance is 1.

(1-1-4) Calculation Unit 22

The calculation unit 22 of the learning unit 20 receives the preprocessed set X(0 : t) of time-series data of state variables and the preprocessed set Y(0 : t) of time-series data of observation variables from the preprocessing unit 16, executes the calculation of the variance-covariance matrix K (X, X') of the Gaussian process, and outputs the variance-covariance matrix K (X, X') to the optimization unit 24.

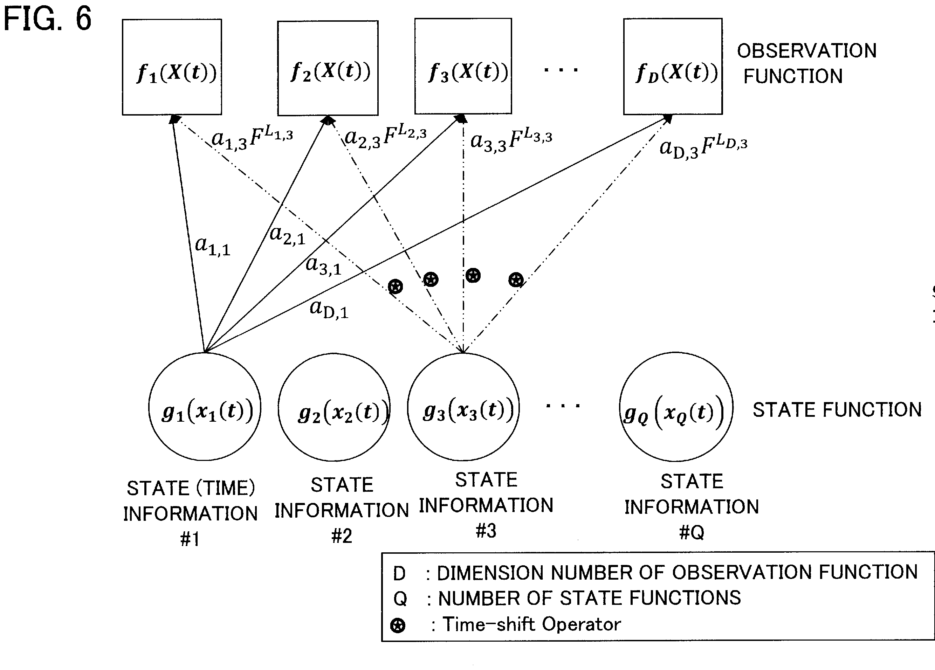

Fig. 6 is a diagram showing an example of a process executed by the calculation unit 22 of the learning unit 20. In the example of Fig. 6, the correlation between the time-series data of the observation variables expressed by the GPDM is represented by the linear correlation of the LMC kernels of the MTGP model.

In Fig. 6, by introducing a time-shift operator (referred to also as a "lag operator") $F^L$, it is possible to express a lag effect in which state functions $g_1(x_1(t))$ to $g_Q(x_Q(t))$ influence observation functions $f_1(x_1(t))$ to $f_D(x_D(t))$ with a lag (or with a lead (in advance)). The lag effect means not that cause influences result at the same time as the cause but that "cause influences result with a lag" or "cause influences result earlier". A concrete example of the lag effect is that the crude oil price rises and the gasoline price does not rise in conjunction with the crude oil price but rises after the elapse of a certain period (e.g., a period until the next stocking). Another concrete example of the lag effect is previously raising the gasoline price in anticipation of a rise in the crude oil price in the future.

By adding the time information as an item of the state information, the calculation unit 22 can take a time-series property or the periodicity into consideration. However, it is also possible for the calculation unit 22 to leave the lag effect regarding the time information out of consideration.

In the following, a description will be given of a method of calculating the variance-covariance matrix K (X, X') in the first embodiment. In the GPDM, a state equation is defined as expression (1), and an observation equation is defined as expression (2).

$$x_q(t) = g_q\left(x_q(0 : t - 1)\right) + u_q(t) \quad (1).$$

$$y_d(t) = f_d\left(X(t)\right) + v_d(t) \quad (2).$$

Here, X(t) represents a set $\{x_1(t), x_2(t), ..., x_Q(t)\}$ of state variables. The terms $u_q(t)$ and $v_d(t)$ represent white Gaussian noise.

In a Gaussian process state space model, modeling of a state transition function f(x) and a state function g(x) in the model by the Gaussian process is executed, and the modeled functions are generally represented as the following expressions (3) and (4) by using representation in the Gaussian process:

$$g(x) \sim gp(0, K_g) \quad (3).$$

$$f(x) \sim gp(0, K_f) \quad (4).$$

The expression (3) represents nonlinear time evolution of the state, and the expression (4) represents transformation from the state function to the observation function. Further, Kg and Kf represent Gram matrices.

The state function $g_q(x)$ in the expression (1) represents a model $gp(0, k(x_q, x_q'))$ of the Gaussian process generated from state information $x_q$.

A notation $k_q$ represents a positive definite kernel. As the positive definite kernel to be used, a kernel suitable for the data such as an RBF kernel (Radial Basis Function kernel) is selected. For example, the RBF kernel is given by the following expression (5) :

$$k\left(x_q, x_q'\right) = \sigma_q^1 \, exp\left\{-\frac{\left\|x_q - x_q'\right\|^2}{2\sigma_q^{2\,2}}\right\} \quad (5).$$

In the expression (5),

$$\sigma_q^1, ... \sigma_q^2$$

are causal relationship parameters of the RBF kernel.

An observation function $f_d(X(t))$ in LMC in the conventional method is represented by expression (6):

$$f_d\left(X(t)\right) = \sum_{q=1}^{Q} a_{d,q} g_q\left(x_q(t)\right) \quad (6).$$

In contrast, an observation function $f_d(X(t))$ in LMC proposed in the first embodiment is represented by the following expression (7) :

$$f_d\left(X(t)\right) = \sum_{q=1}^{Q} a_{d,q} F^{L_{d,q}} g_q\left(x_q(t)\right) \quad (7).$$

In the expression (6) in the conventional method, $a_{d,q}$ represents a linear correlation of LMC in the conventional method, and represents a correlation coefficient from the state variable q to the observation variable d.

In the expression (7) in the first embodiment,

$F^{L_{d,q}}$

is the time-shift operator newly introduced in the first embodiment, and $L_{d,q}$ represents a lag coefficient from the state variable q to the observation variable d.

$F^L$ represents the time-shift operator (lag operator) that shifts the state information of the state function towards the future (or the past) along the time axis, and is defined as the following expression (8):

$$F^L g_q\big(x_q(t)\big) \;=\; g_q\big(x_q(t+L)\big) \qquad (8).$$

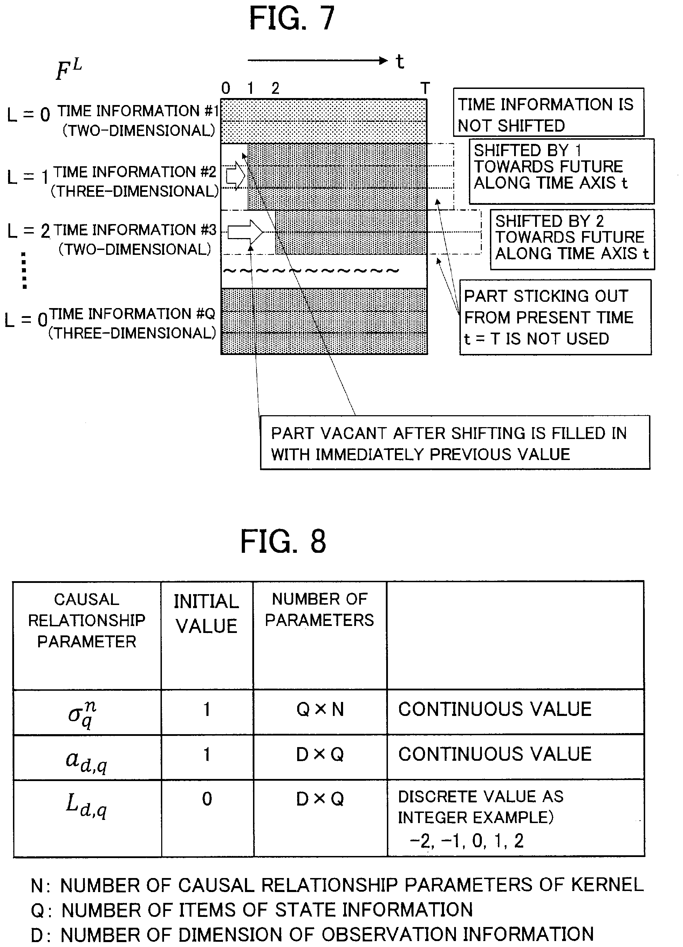

Fig. 7 is a diagram showing an example of a process executed by the time-shift operator of the calculation unit 22 of the learning unit 20. Fig. 7 shows the operation of the time-shift operator $F^L$. The example of Fig. 7 shows a case where the information is shifted towards the future (L > 0) along the time axis t. When the information is shifted towards the past (L < 0) along the time axis t, the direction of the shifting is opposite to the direction in the case of Fig. 7.

As in the example of Fig. 7, it is also possible not to apply the time-shift operator to the time information included in the state information, and L = 0 is applied in the case of not applying the time-shift operator.

In the example of Fig. 7, the calculation unit 22 applies L = 1 to the state information #2 as three-dimensional time-series data, for example, in which case every item of data in the three-dimensional time-series data is shifted along the time axis t. After the shifting, the calculation unit 22 deletes a part sticking out towards the future (i.e., a part where t = T + 1), and a vacant part (i.e., a part where t = 0) is filled in with an immediately previous value (i.e., the value of a part where t = 1).

In the example of Fig. 7, the calculation unit 22 applies L = 2 to the state information #3 as two-dimensional time-series data, for example, in which case every item of data in the two-dimensional time-series data is shifted along the time axis t. After the shifting, the calculation unit 22 deletes a part sticking out towards the future (i.e., a part where t = T + 1 or t = T + 2), and a vacant part (i.e., a part where t = 0 or t = 1) is filled in with an immediately previous value (t = 2).

In the example of Fig. 7, the calculation unit 22 applies L = 0 to the state information #Q as three-dimensional time-series data, for example, in which case there is no shifting of the three-dimensional time-series data and the three-dimensional time-series data remains unchanged.

<Method of Calculating Variance-covariance Matrix of Proposed Model>

When the observation data

$$f \;=\; \left\{\big\{f_d\big(X(t)\big)\big\}_{t=0}^{T}\right\}_{d=0}^{D}$$

in the expression (7) abides by the Gaussian process according to an existing method, f is represented by a multidimensional Gaussian distribution shown in the following expression (9):

$$f \;\sim\; \mathcal{N}\big(\mu(X), K(X, X')\big) \;=\; \mathcal{N}\big(0, K(X, X')\big) \qquad (9).$$

In the expression (9), the following expressions hold:

$$K(X, X') \;\in\; \mathbb{R}^{DN \times DN}$$

$$\big(K(X, X')\big)_{d,d'} \;=\; cov[f_d(X), f_{d'}(X')]$$

$$f_d(X) \;=\; \big\{f_d\big(X(t)\big)\big\}_{t=0}^{T} .$$

K(X, X') is a matrix referred to as the variance-covariance matrix (or Gram matrix) and indicating similarity between state variables (i.e., $X \Leftrightarrow X'$).

In the expression (9), $\mu(X)$ represents an average matrix of the state variable. Since the state variable has been normalized by the normalization unit 18, $\mu(X) = 0$ holds.

Each component $(K(X, X'))_{d,d}$ of the variance-covariance matrix K(X, X') can be calculated as in the following expression (10) by using $f_d(X)$ in the expression (7) :

$$\left(K(X,X')\right)_{d,d'} = cov[f_d(X), f_{d'}(X')]$$

$$= \sum_{q=1}^{Q} \sum_{q'=1}^{Q} a_{d,q} a_{d',q'} cov\left[F^{L_{d,q}} g_q(x_q(t)), F^{L_{d',q'}} g_{q'}(x'_{q'}(t))\right]$$

$$= \sum_{q=1}^{Q} a_{d,q} a_{d',q} cov\left[F^{L_{d,q}} g_q\left(x_q(t)\right), F^{L_{d',q}} g_q\left(x'_{q'}(t)\right)\right]$$

$$= \sum_{q=1}^{Q} a_{d,q} a_{d',q} cov\left[g_q(x_q(t + L_{d,q})), g_q(x'_{q'}(t + L_{d',q}))\right]$$

$$= \sum_{q=1}^{Q} a_{d,q} a_{d',q} k_q\left(x_q(t + L_{d,q}), x'_q(t + L_{d',q})\right) \qquad (10).$$

In the equation modification from the second line to the third line in the expression (10),

$$cov\left[g_q(x_q(t)), g_{q'}(x'_{q'}(t))\right] = 0$$

holds since different states (q ≠ q') are independent of each other.

The variance-covariance matrix K(X, X') is represented as in the following expressions (11) and (12):

$$K(X,X') = \sum_{q=1}^{Q} B_q \oplus k_q\left(x_q(t + L_{d,q}), x'_q(t + L_{d',q})\right) \qquad (11)$$

$$B_q = \begin{bmatrix} a_{1,q}^2 & a_{1,q}a_{2,q} & \cdots & a_{1,q}a_{D,q} \\ a_{1,q}a_{2,q} & a_{2,q}^2 & \cdots & a_{2,q}a_{D,q} \\ \vdots & \vdots & \ddots & \vdots \\ a_{1,q}a_{D,q} & a_{2,q}a_{D,q} & \cdots & a_{D,q}^2 \end{bmatrix} \qquad (12).$$

Here, $B_q$ is referred to as a coregionalization matrix, indicates linear transformation from a state function to an observation function, and is represented as follows:

$$B_q \in \mathbb{R}^{D \times D} .$$

The calculation of the variance-covariance matrix K(X, X') can be performed by using the set X(0 : t) of time-series data of state variables and the causal relationship parameter θ shown below.

$$\theta = \left\{\theta_q^n, a_{d,q}, L_{d,q}\right\}.$$

(1-1-5) Optimization Unit 24

Fig. 8 is a diagram showing examples of an initial value and the number of parameters regarding the causal relationship parameter θ in tabular form. These causal relationship parameters are optimized by the optimization unit 24 of the learning unit 20.

The optimization unit 24 receives the variance-covariance matrix K (X, X') calculated by the calculation unit 22, executes calculation of marginal likelihood and a process of optimizing the causal relationship parameter θ so as to minimize the peripheral likelihood, and stores the optimized causal relationship parameter θ in the causal relationship parameter DB.

The marginal likelihood is obtained by the following calculation. A probability that observation information is observed can be obtained as follows by expression (13):

$$p(y|X,\theta) = N\big(y|0, K_\theta(X,X')\big)$$
$$= \frac{1}{(2\pi^{N/2})} \frac{1}{|K_\theta(X,X')|^{1/2}} exp\left(-\frac{1}{2} y^T K_\theta(X,X')^{-1} y\right) \qquad (13).$$

By taking the logarithm of both sides of the expression (13), the following marginal likelihood can be calculated, where $K_\theta(X, X')$ represents the variance-covariance matrix K (X, X') calculated by using the causal relationship parameter:

$$\log p(y|X,\theta) = -\frac{1}{2} y^T K_\theta(X,X')^{-1} y - \frac{1}{2}\log |K_\theta(X,X')| - \frac{ND}{2}\log 2\pi \qquad (14).$$

Here, N represents the length of a feature vector X, and D represents the number of output dimensions of y.

For the optimization of the causal relationship parameter θ, it is desirable to maximize the marginal likelihood logp(y|X, θ). Both sides of the expression (14) are multiplied by -1 to fit the format of a generic optimization problem, and the optimization function E is minimized in the following expression (15):

$$E = -\log p(y|X,\theta)$$
$$= \frac{1}{2} y^T K_\theta(X,X')^{-1} y + \frac{1}{2}\log|K_\theta(X,X')| + \frac{ND}{2}\log 2\pi \qquad (15).$$

The optimization unit 24 updates θ so as to minimize the optimization function E in the expression (15). When the causal relationship parameter θ is updated in the optimization, updating $K_\theta(X, X')$ also becomes necessary, and thus the calculation unit 22 calculates $K_\theta(X, X')$.

For the optimization, the optimization unit 24 can use stochastic gradient descent or the like as a known technique. For example, $L_{d,q}$ can be optimized by using grid search, and the remaining causal relationship parameters can be optimized by using the stochastic gradient descent.

By executing the above-described operation, the optimized causal relationship parameter θ of multivariate causal relationship can be obtained. Conventionally, the causal relationship "state information → observation information" was inferred from bivariate time-series data in the case of using the state variable (Q = 1) and the observation variable (D = 1). In contrast, in the first embodiment, each of the state variable and the observation variable can be made one-dimensional or higher, and thus it is possible to infer the causal relationship between time-series data of an arbitrary number of variates, and the causal relationship of multivariate (Q + D) time-series data can be inferred. That is, in the first embodiment, it becomes possible to clarify the causal relationship between a plurality of state variables and a plurality of observation variables, and it is possible to make not only the inference of the causal relationship of bivariate time-series data but also the inference of the causal relationship of time-series data of three or more variates.

(1-2) Operation

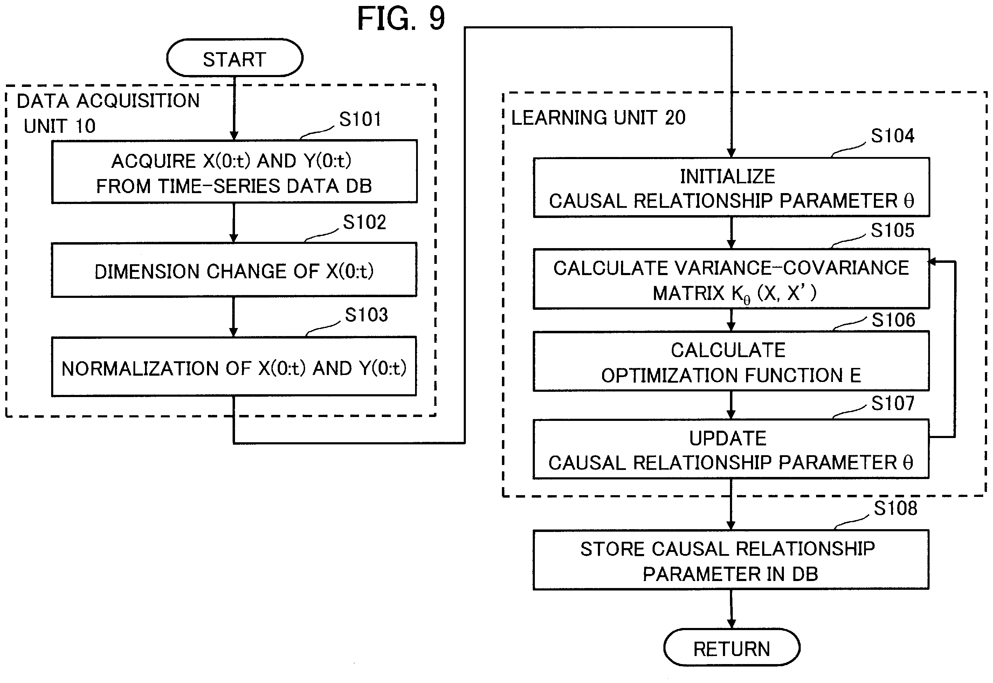

Fig. 9 is a flowchart showing the operation (i.e., learning method) of the causal relationship inference device 100 according to the first embodiment. First, in step S101, the input unit 14 acquires the set X(0 : t) of time-series data of state variables and the set Y(0 : t) of time-series data of observation variables from the time-series data DB 12.

Subsequently, in step S102, the preprocessing unit 16 performs the dimension change (i.e., dimension compression or dimension expansion) on state variables $x_q(0 : t)$ for which the dimension change is necessary in the set X(0 : t) of time-series data of state variables.

Subsequently, in step S103, the preprocessing unit 16 executes the normalization of the set X(0 : t) of time-series data of state variables and the set Y(0 : t) of time-series data of observation variables.

Subsequently, in step S104, the calculation unit 22 sets the following causal relationship parameter $\theta$ at the initial value:

$$\theta = \left\{ \theta_q^n, a_{d,q}, L_{d,q} \right\}.$$

Subsequently, in step S105, the calculation unit 22 calculates the variance-covariance matrix $K_\theta(X, X')$ in the expression (11) by using the set X(0 : t) of time-series data of state variables and the causal relationship parameter $\theta$.

Subsequently, in step S106, the optimization unit 24 calculates the optimization function E in the expression (15).

Subsequently, in step S107, the optimization unit 24 optimizes (i.e., updates) the causal relationship parameter $\theta$ so as to minimize the optimization function E.

In the update of the variance-covariance matrix $K_\theta(X, X')$, K(X, X') in the expression (11) is calculated in the step S105 by using the updated causal relationship parameter $\theta$.

The steps S105 to S107 are repeated until the optimization function E converges. When the optimization function E is judged to have converged, the correlation coefficient $a_{d,q}$ and the lag coefficient $L_{d,q}$ as the causal relationship parameters are stored in the causal relationship parameter DB 26.

(1-3) Effect

According to the first embodiment, it becomes possible to clarify the causal relationship between a plurality of state variables and a plurality of observation variables, and it is possible to infer the causal relationship of time-series data of an arbitrary number of variates.

(2) Second Embodiment

(2-1) Configuration

(2-1-1) Causal Relationship Inference Device 200

A causal relationship inference device 200 reads out a causal relationship parameter $\theta$, indicating the causal relationship between time-series data of a plurality of state variables and time-series data of a plurality of observation variables in regard to each layer, from the causal relationship parameter DB, rearranges the time-series data of the plurality of state variables and the time-series data of the plurality of observation variables in regard to each layer based on the causal relationship parameter, acquires verification data including a set X (0 : t) of time-series data of a plurality of state variables and a set Y (0 : t) of time-series data of a plurality of observation variables, and performs one or both of verification of Granger causality by use of the verification data and verification of a spurious correlation by use of the verification data on the rearranged time-series data of the plurality of state variables and the rearranged time-series data of the plurality of observation variables.

Specifically, the causal relationship inference device 200 according to the second embodiment is a causal graph construction device having a causal graph construction function of constructing a causal graph. The causal graph is a graph obtained by arranging a list of data items in a relationship of "cause → result" in graph structure based on the information regarding the causal relationship obtained in the first embodiment. State functions and observation functions as elements of the constructed causal graph are rearranged based on the correlation coefficient $a_{d,q}$ and the lag coefficient $L_{d,q}$ stored in the causal relationship parameter DB. The constructed causal graph is verified by using the Granger causality and the spurious correlation. The verified causal graph is outputted.

The causal relationship inference device 200 according to the second embodiment constructs the causal graph by using the correlation coefficient $a_{d,q}$ and the lag coefficient $L_{d,q}$ as the causal relationship parameters. The correlation coefficient $a_{d,q}$ and the lag coefficient $L_{d,q}$ as the causal relationship parameters are, for example, causal relationship parameters of the learned model generated by the causal relationship inference device 100 according to the first embodiment. The causal relationship inference device 200 is a computer, for example. The causal relationship inference device 200 can be either a computer the same as or different from the computer forming the causal relationship inference device 100 according to the first embodiment.

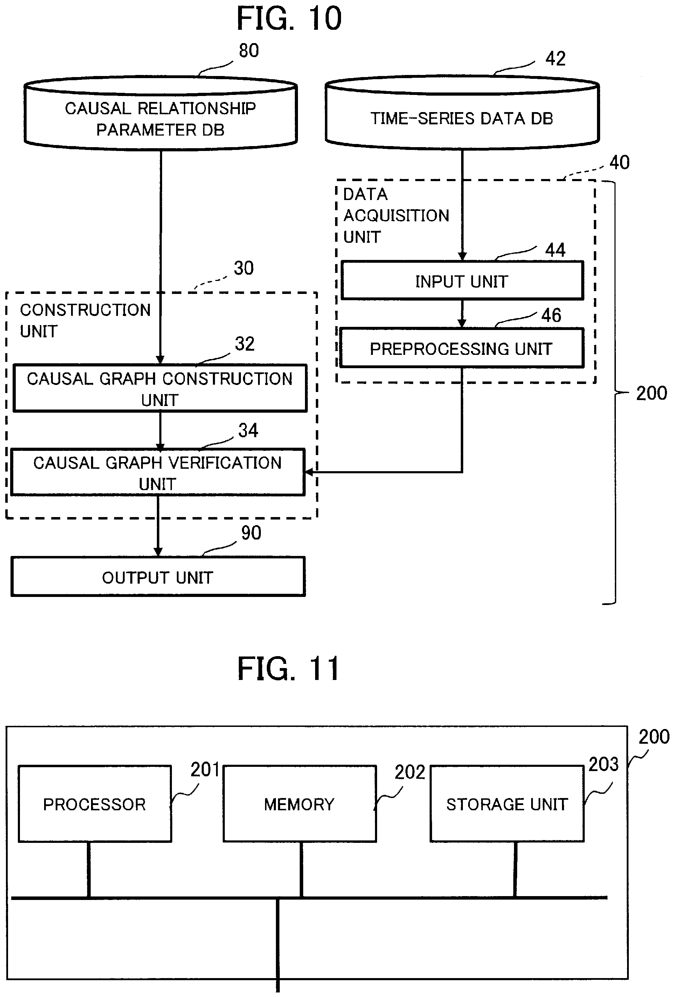

Fig. 10 is a block diagram showing the configuration of the causal relationship inference device 200 according to the second embodiment. The causal relationship inference device 200 is a device capable of executing a causal relationship inference method (i.e., causal graph construction method) according to the second embodiment. As shown in Fig. 10, the causal relationship inference device 200 includes a construction unit 30, a data acquisition unit 40 and an output unit 90. The construction unit 30 includes a causal graph construction unit 32 and a causal graph verification unit 34.

The construction unit 30 may include a causal relationship parameter DB 80 that provides the causal relationship parameters to the causal graph construction unit 32. The data acquisition unit 40 includes an input unit 44 and a preprocessing unit 46. The data acquisition unit 40 may include a time-series data DB 42 that provides the time-series data to the input unit 44. The output unit 90 outputs the causal graph constructed by the construction unit 30. While the time-series data DB 42 and the causal relationship parameter DB 80 may be stored in a storage unit (a storage unit 203 in Fig. 11 which will be explained later) as a part of the causal relationship inference device 200, the time-series data DB 42 and the causal relationship parameter DB 80 may also be stored in a storage unit of an external device (e.g., server on a network capable of communicating with the causal relationship inference device 200) separate from the causal relationship inference device 200.

Fig. 11 is a diagram showing an example of the hardware configuration of the causal relationship inference device 200. The causal relationship inference device 200 includes a processor 201, a memory 202, and the storage unit 203 as a nonvolatile storage device. The causal relationship inference device 200 may include an interface with an external device, a communication unit that executes communication with other devices via a network, and so forth. The processor 201 is a CPU or the like. The memory 202 is, for example, a volatile semiconductor memory such as a RAM. The storage unit 203 is a storage device such as an HDD or an SSD. The storage unit 203 stores information (e.g., various databases) and a program.

Functions of the causal relationship inference device 200 are implemented by processing circuitry. The processing circuitry can be either dedicated hardware or the processor 201 executing a program stored in the memory 202.

In the case where the processing circuitry is the processor 201, an inference program (i.e., causal graph construction program) according to the second embodiment is implemented by software, firmware, or a combination of software and firmware. The software and the firmware are described as programs and stored in the memory 202. The processor 201 is capable of implementing the functions of the units shown in Fig. 10 by reading out and executing the program stored in the memory 202. The program is installed in the causal relationship inference device 200 by downloading via a network or from a record medium recording information such as an optical disc.

(2-1-2) Data Acquisition Unit 40

The data acquisition unit 40 has functions similar to those of the data acquisition unit 10 in the first embodiment. However, the input unit 44 acquires data for verifying the causal graph by use of the Granger causality and the spurious correlation which will be described later.

(2-1-3) Causal Graph Construction Unit 32

The causal graph construction unit 32 of the construction unit 30 acquires the causal relationship parameters $a_{d,q}$, $L_{d,q}$ stored in the causal relationship parameter DB 80, constructs the causal graph by using the causal relationship parameters, and outputs the constructed causal graph to the causal graph verification unit 34.

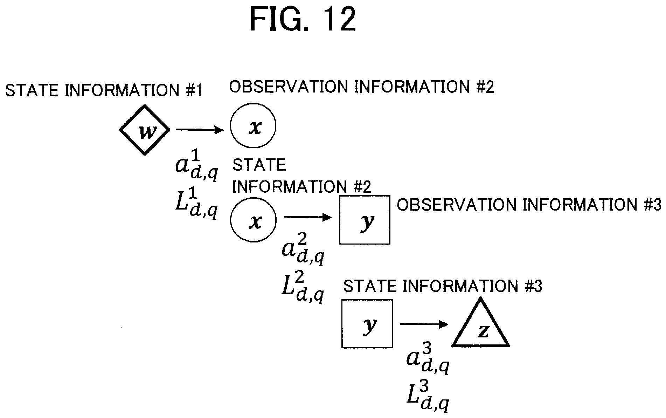

Fig. 12 is a diagram showing a causal graph construction process executed by the causal graph construction unit 32 of the construction unit 30. In Fig. 12, when x (state information) has a lag (delay) relative to y (observation information) and the correlation coefficient between x (state information) and y (observation information) is high, the possibility that there is a causal relationship "y' fluctuates due to x' as the cause" (i.e., x' → y') can be considered to be high.

In Fig. 12, the causal relationship parameters are as follows:

$$a_{d,q}^{h}, L_{d,q}^{h} \ .$$

These causal relationship parameters are arranged in order of "state information → observation information" in regard to each layer. Incidentally, h is a positive integer representing a layer number.

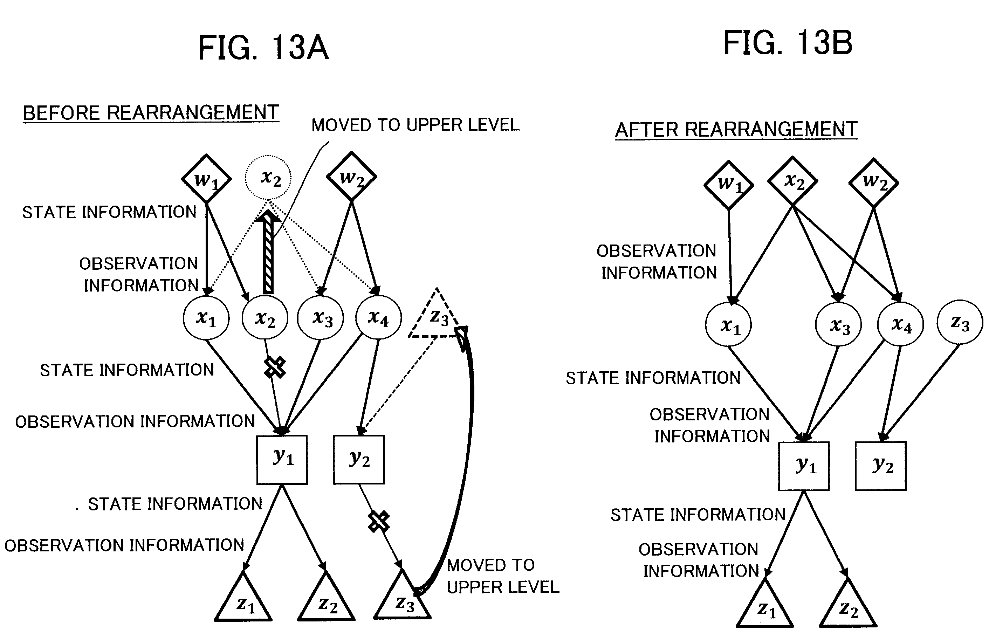

Figs. 13A and 13B are diagrams showing an example of a rearrangement process for state information and observation information executed by the causal graph construction unit 32 of the construction unit 30. As shown in Figs. 13A and 13B, state information and observation information are connected to each other by an arrow pointing from the state information towards the observation information.

In Fig. 13A, when the observation information has a lag (lead) relative to the state function, the direction of the arrow is reversed. As shown in Fig. 13B, when the correlation coefficient is low, in consideration of the possibility of being a confounding factor or an intermediate factor, rearrangement is made so as to place the information in an upper level or the like of the causal graph.

When the rearrangement has been made as in Figs. 13A and 13B, the causal relationship parameters are obtained again by the causal relationship inference device 100 according to the first embodiment by using the state variables and the observation variables after the rearrangement.

(2-1-4) Causal Graph Verification Unit 34

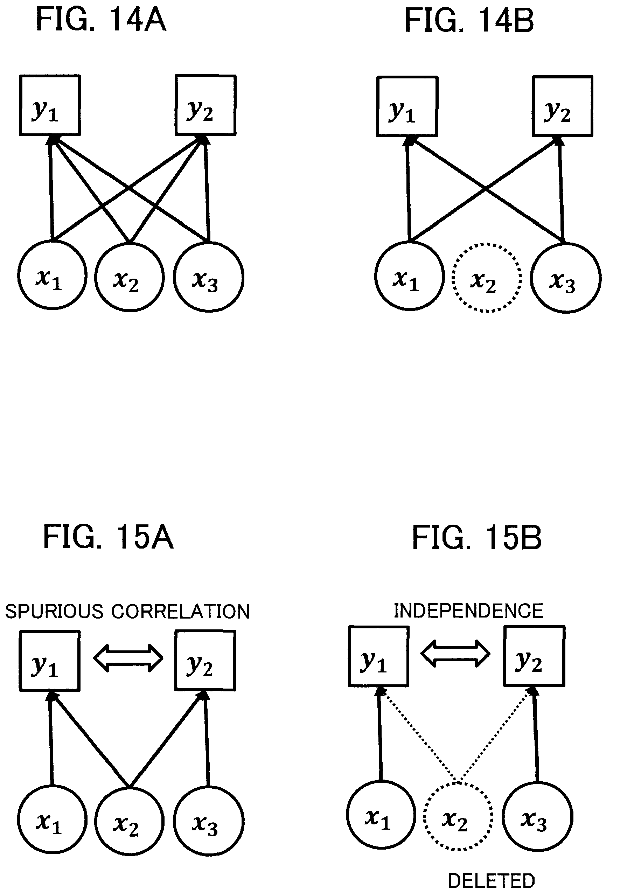

Figs. 14A and 14B are diagrams showing an example of a verification process executed by the causal graph verification unit 34 of the construction unit 30. As for the Granger causality, when the prediction accuracy decreases in a case (case 2) where the observation variables $y_1$ and $y_2$ are predicted by use of the state variables $x_1$ and $x_3$ by deleting the state variable $x_2$ as shown in Fig. 14B in comparison with a case (case 1) where the observation variables $y_1$ and $y_2$ are predicted by use of the state variables $x_1$, $x_2$ and $x_3$ by including the state variable $x_2$ as shown in Fig. 14A, for example, the state variable $x_2$ is considered to have the Granger causality with the observation variables $y_1$ and $y_2$. In contrast, when the prediction accuracy increases in the case (case 2) where the observation variables $y_1$ and $y_2$ are predicted by use of the state variables $x_1$ and $x_3$ in comparison with the case (case 1) where the observation variables $y_1$ and $y_2$ are predicted by use of the state variables $x_1$, $x_2$ and $x_3$, the state variable $x_2$ is considered not to have the Granger causality with the observation variables $y_1$ and $y_2$. When the state variable $x_2$ has no Granger causality, rearrangement of the state variable $x_2$ or deletion of the state variable $x_2$ from the causal graph is made.

For the prediction, the set X(0 : t) of time-series data of state variables and the set Y(0 : t) of time-series data of observation variables used for the inference of the causal relationship by the causal relationship inference device 100 to a set X(t + 1 : t + Δt) of time-series data of feature state variables and a set Y(t + 1 : t + Δt) of time-series data of feature observation variables may be used as prediction verification data (i.e., test data).

It is also possible to obtain the causal relationship parameter

$$\theta = \left\{ \theta_q^n, a_{d,q}, L_{d,q} \right\}$$

by using training data and obtain the following predictive value by Gaussian process regression as a known technique:

$$Y(t + 1 : t + \Delta t)^{prediction}.$$

The prediction error can be evaluated by the following RMSE (Root Mean Squared Error), for example:

$$RMSE = \sqrt{\frac{(Y(t + 1 : t + \Delta t) - Y(t + 1 : t + \Delta t)^{prediction})^2}{\Delta t}}.$$

Figs. 15A and 15B are diagrams showing other examples of the verification process executed by the causal graph verification unit 34 of the construction unit 30. As shown in Figs. 15A and 15B, it is also possible to conduct the verification by estimating how much a factor is influenced (or how long a factor takes on a constant value without change) in a non-stationary state (in which a rapid change (impulse response) occurs in a certain factor due to an external factor or the like).

For example, in the example shown in Fig. 15A, it is considered that there is a method using the observation variables $y_1$ and $y_2$ having a spurious correlation via the state variable $x_2$. In the example shown in Fig. 15B, a case is considered where the state variables $x_1$ and $x_3$ do not influence observation variables other than the observation variables $y_1$ and $y_2$ even though the state variable $x_2$ influences both of the observation variables $y_1$ and yz. When $x_2$ does not change such as when $x_2$ keeps on taking on a fixed value, $x_2$ not changing stops influencing the observation variables $y_1$ and $y_2$, and thus the observation variables $y_1$ and $y_2$ are considered to lose the correlation between each other.

In the verification of the causal relationship by use of a spurious correlation, when the correlation between the observation variables $y_1$ and $y_2$ remains or $x_1$ and the observation variable $y_1$, and $x_2$ and $y_2$, begin exhibiting high correlations even after the disappearance of the influence of $x_2$, the rearrangement of the state variable $x_2$ or the deletion of the state variable $x_2$ from the causal graph is made.

By constructing the causal graph, it becomes possible to predict a sensor value at a place where direct measurement is impossible, search for the cause of abnormality, and so forth. As case examples of application, it is possible to consider prediction of road surface damage from traffic volume or weather information, river water level prediction from rainfall in the vicinity and water level data, electric power demand prediction by use of weather or economic condition data in a vicinal region, and so forth.

(2-2) Operation

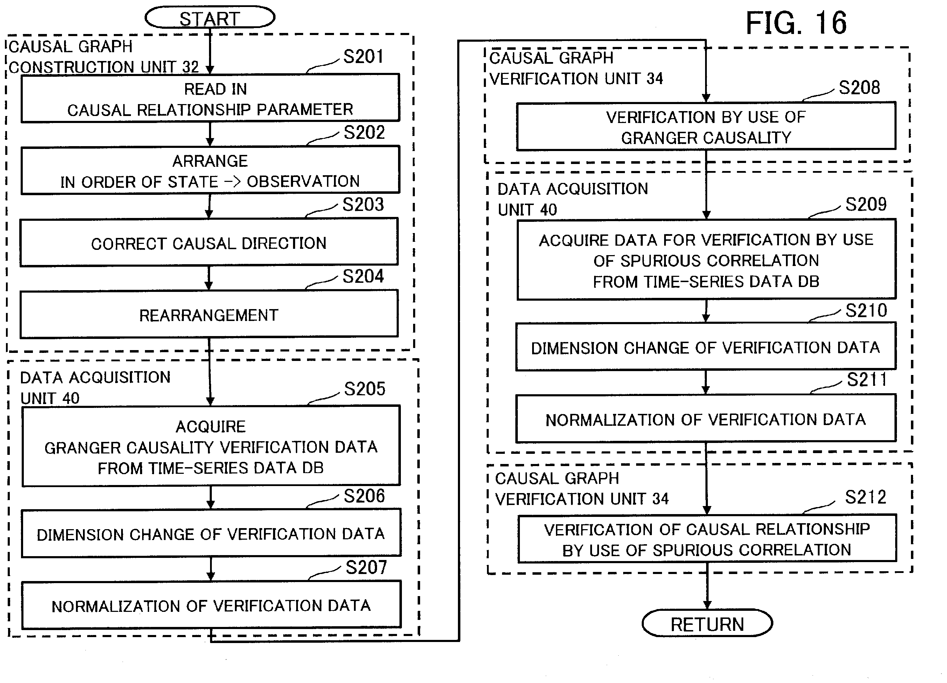

Fig. 16 is a flowchart showing the operation (i.e., inference operation) of the causal relationship inference device 200. First, in step S201, the construction unit 30 acquires a correlation $a_{d,q}^h$ and a lag coefficient $L_{d,q}^h$ regarding each layer from the causal relationship parameter DB.

Subsequently, in step S202, the causal graph construction unit 32 arranges the state information and the observation information in the order of "state information → observation information" in regard to each layer.

Subsequently, in step S203, the causal graph construction unit 32 corrects a causal direction (i.e., the direction of the arrow).

Subsequently, in step S204, the causal graph construction unit 32 makes the rearrangement of the state information and the observation information in the causal graph.

Subsequently, in step S205, the input unit 44 acquires Granger causality verification data from the time-series data DB 42.

Subsequently, in step S206, the preprocessing unit 46 performs the dimension change of the verification data.

Subsequently, in step S207, the preprocessing unit 46 performs the normalization of the verification data.

Subsequently, in step S208, the causal graph verification unit 34 verifies the causal graph by use of the Granger causality.

Subsequently, in step S209, the input unit 44 acquires verification data for verification by use of the spurious correlation from the time-series data DB 42.

Subsequently, in step S210, the preprocessing unit 46 performs the dimension change of the verification data.

Subsequently, in step S211, the preprocessing unit 46 performs the normalization of the verification data.

Subsequently, in step S212, the causal graph verification unit 34 conducts the verification of the causal relationship by use of the spurious correlation.

The causal graph verified by the causal graph verification unit 34 according to the process described above is outputted to the output unit 90.

(2-3) Effect

According to the second embodiment, by constructing the causal graph, it becomes possible to predict a sensor value at a place where direct measurement is impossible, search for the cause of abnormality, and so forth.

Further, the second embodiment is applicable to the prediction of road surface damage from traffic volume or weather information, the river water level prediction from rainfall in the vicinity and water level data, the electric power demand prediction by use of weather or economic condition data in a vicinal region, and so forth, for example.

(2-4) Examples of Application

[Prediction of Observation Value]

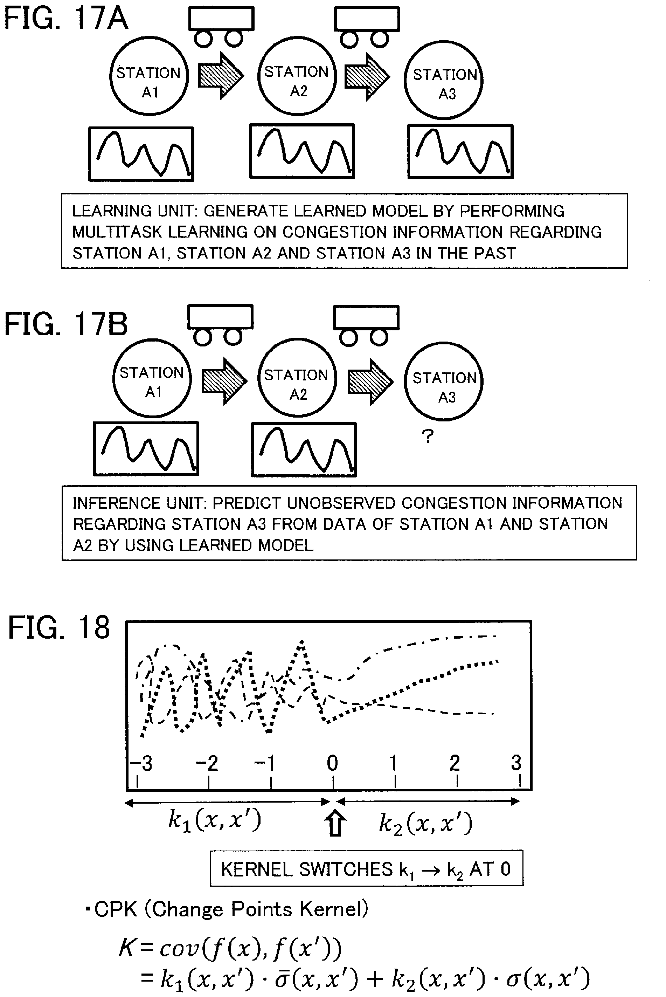

Figs. 17A and 17B show a learning unit and an inference unit that execute a process of predicting time-series data not observed by the causal relationship inference device 200 due to a relationship between time-series data. In this case, the causal relationship inference device 100 generates a learned model by performing multitask learning on congestion information regarding a station A1, a station A2 and a station A3 in the past shown in Fig. 17A. When the congestion information regarding only the station A1 and the station A2 among the station A1, the station A2 and the station A3 is known and the congestion information regarding the station A3 is unknown (in the case of Fig. 17B), the causal relationship inference device 100 is capable of making the inference unit predict (infer) a congestion level of the station A3 from a correlation between the congestion levels of stations or the lag information by using the learned model generated by the multitask learning.

[Abnormality Detection or Failure Prediction]

Fig. 18 is a diagram showing operation when change points or failures in sensor data are learned by introducing a change point kernel into the causal relationship inference device 100. Failure prediction can be made by using a learned model generated by the learning of the change points or the failures in the sensor data.

$$K = cov(f(x), f(x')) = k_1(x, x') \cdot \bar{\sigma}(x, x') + k_2(x, x') \cdot \sigma(x, x').$$

# EP 4 510 048 A1

[Application to Causal Impact]

In publicly known time-series causal inference frameworks (e.g., Causal Impact), it is also possible to replace a standard linear state space model with the method in the embodiments (GPDM + MTGP model). In this case, it becomes possible to also consider a nonlinear or a non-stationary correlation, by which the prediction accuracy can be increased.

[Speeding up of Calculation]

The above-described calculation of the MTGP model is high in a computation amount $O(D^3N^3)$, a memory $O(D^2N^2)$, a computation load or a memory cost. Therefore, the multitask learning can be sped up and the memory cost can be reduced by using random Fourier features or variational Fourier features, for example.

DESCRIPTION OF REFERENCE CHARACTERS

100: causal relationship inference device, 200: causal relationship inference device (causal graph construction device), 10: data acquisition unit, 12, 42: time-series data DB, 14: input unit, 16: preprocessing unit, 17: dimension change unit, 18: normalization unit, 20: learning unit, 22: calculation unit, 24: optimization unit, 26, 80: causal relationship parameter, 30: construction unit, 32: causal graph construction unit, 34: causal graph verification unit, 40: data acquisition unit, 44: input unit, 46: preprocessing unit, 90: output unit.

**Claims**

1. A causal relationship inference device comprising:

   a data acquisition unit to acquire learning data including a set of time-series data of a plurality of state variables and a set of time-series data of a plurality of observation variables;
   a calculation unit to calculate a causal relationship parameter indicating a causal relationship between the time-series data of the plurality of state variables and the time-series data of the plurality of observation variables, to calculate a variance-covariance matrix of a Gaussian process from the learning data and the causal relationship parameter, and to represent the causal relationship parameter by a multi-task Gaussian process model; and
   an optimization unit to calculate an optimization function based on the variance-covariance matrix and to update the causal relationship parameter based on the optimization function.

2. The causal relationship inference device according to claim 1, wherein

   the causal relationship parameter includes a correlation coefficient indicating a correlation between the time-series data of the plurality of state variables and the time-series data of the plurality of observation variables and a lag coefficient indicating a lag between the time-series data of the plurality of state variables and the time-series data of the plurality of observation variables, and
   the calculation unit represents the correlation by a linear correlation of LMC kernels of the multi-task Gaussian process model.

3. The causal relationship inference device according to claim 1 or 2, wherein the data acquisition unit performs a dimension change of the time-series data of the plurality of state variables and provides the time-series data of the state variables after undergoing the dimension change to the calculation unit.

4. The causal relationship inference device according to any one of claims 1 to 3, wherein the time-series data of the plurality of state variables include time-series data of time information.

5. The causal relationship inference device according to any one of claims 1 to 3, wherein the time-series data of the plurality of state variables include time-series data of angle information.

6. The causal relationship inference device according to any one of claims 1 to 5, wherein the optimization unit stores the updated causal relationship parameter in a causal relationship parameter database.

7. The causal relationship inference device according to any one of claims 1 to 6, comprising:

a causal graph construction unit to rearrange the time-series data of the plurality of state variables and the time-series data of the plurality of observation variables in regard to each layer based on the causal relationship parameter indicating the causal relationship between the time-series data of the plurality of state variables and the time-series data of the plurality of observation variables in regard to each layer;

another data acquisition unit to acquire verification data including a set of time-series data of a plurality of state variables and a set of time-series data of a plurality of observation variables; and

a causal graph verification unit to perform one or both of verification of Granger causality by use of the verification data and verification of a spurious correlation by use of the verification data on the rearranged time-series data of the plurality of state variables and the rearranged time-series data of the plurality of observation variables.

8.  A causal relationship inference device comprising:

a causal graph construction unit to read out a causal relationship parameter, indicating a causal relationship between time-series data of a plurality of state variables and time-series data of a plurality of observation variables in regard to each layer, from a causal relationship parameter database and to rearrange the time-series data of the plurality of state variables and the time-series data of the plurality of observation variables in regard to each layer based on the causal relationship parameter;

a data acquisition unit to acquire verification data including a set of time-series data of a plurality of state variables and a set of time-series data of a plurality of observation variables; and

a causal graph verification unit to perform one or both of verification of Granger causality by use of the verification data and verification of a spurious correlation by use of the verification data on the rearranged time-series data of the plurality of state variables and the rearranged time-series data of the plurality of observation variables.

9.  The causal relationship inference device according to claim 8, wherein the causal relationship parameter includes a correlation coefficient indicating a correlation between the time-series data of the plurality of state variables and the time-series data of the plurality of observation variables and a lag coefficient indicating a lag between the time-series data of the plurality of state variables and the time-series data of the plurality of observation variables.

10. The causal relationship inference device according to any one of claims 1 to 9, further comprising an inference unit to acquire time-series data of a plurality of state variables and time-series data of a plurality of observation variables regarding a prediction object and to predict observation information in an unobserved dimension from the time-series data of the plurality of state variables and the time-series data of the plurality of observation variables regarding the prediction object by using a learned model based on the causal relationship parameter for predicting the observation information in the unobserved dimension.

11. A causal relationship inference method to be executed by a causal relationship inference device, the method comprising:

a step of acquiring learning data including a set of time-series data of a plurality of state variables and a set of time-series data of a plurality of observation variables;

a step of calculating a causal relationship parameter indicating a causal relationship between the time-series data of the plurality of state variables and the time-series data of the plurality of observation variables, calculating a variance-covariance matrix of a Gaussian process from the learning data and the causal relationship parameter, and representing the causal relationship parameter by a multi-task Gaussian process model; and

a step of calculating an optimization function based on the variance-covariance matrix and updating the causal relationship parameter based on the optimization function.

12. A causal relationship inference program that causes a computer to execute:

a step of acquiring learning data including a set of time-series data of a plurality of state variables and a set of time-series data of a plurality of observation variables;

a step of calculating a causal relationship parameter indicating a causal relationship between the time-series data of the plurality of state variables and the time-series data of the plurality of observation variables, calculating a variance-covariance matrix of a Gaussian process from the learning data and the causal relationship parameter, and representing the causal relationship parameter by a multi-task Gaussian process model; and a step of calculating an optimization function based on the variance-covariance matrix and updating the causal relationship parameter based on the optimization function.

# FIG. 1

TIME-SERIES DATA DB ⟋12

DATA ACQUISITION UNIT ⟋10

INPUT UNIT ⟋14

↓

PREPROCESSING UNIT ⟋16

↓

LEARNING UNIT ⟋20

CALCULATION UNIT ⟋22

↓

OPTIMIZATION UNIT ⟋24

100

↓

CAUSAL RELATIONSHIP PARAMETER DB ⟋26

# FIG. 2

100

PROCESSOR ⟋101

MEMORY ⟋102

STORAGE UNIT ⟋103

# FIG. 3

16

**PREPROCESSING UNIT**

17

**DIMENSION CHANGE UNIT**

↓

18

**NORMALIZATION UNIT**

# FIG. 4

| | DAY | HOUR | MIN |
|---|---|---|---|
| 1 | 20 | 0 | 0 |
| 2 | 20 | 0 | 5 |
| 3 | 20 | 0 | 10 |
| ⋮ | ⋮ | ⋮ | ⋮ |
| 2014 | 26 | 23 | 45 |
| 2015 | 26 | 23 | 50 |
| 2016 | 26 | 23 | 55 |

DIMENSION COMPRESSION ⇒

| | DAY | HOUR/ MIN |
|---|---|---|
| 1 | 20 | 0 |
| 2 | 20 | 0 + 5/60 |
| 3 | 20 | 0 + 10/60 |
| ⋮ | ⋮ | ⋮ |
| 2014 | 26 | 23 + 45/60 |
| 2015 | 26 | 23 + 50/60 |
| 2016 | 26 | 23 + 55/60 |

# FIG. 5

| | ANGLE $\alpha$ (°) |
|---|---|
| 1 | 12 |
| 2 | 15 |
| 3 | 17 |
| ⋮ | ⋮ |
| 2014 | 331 |
| 2015 | 355 |
| 2016 | 15 |

DIMENSION EXPANSION ⇒

| | $\sin \alpha$ | $\cos \alpha$ |
|---|---|---|
| 1 | 0.21 | 0.98 |
| 2 | 0.26 | 0.97 |
| 3 | 0.29 | 0.97 |
| ⋮ | ⋮ | ⋮ |
| 2014 | −0.48 | 0.87 |
| 2015 | −0.09 | 1.00 |
| 2016 | 0.26 | 0.97 |

FIG. 6

EP 4 510 048 A1

# FIG. 7

$F^L$

L = 0 TIME INFORMATION #1 (TWO-DIMENSIONAL)

L = 1 TIME INFORMATION #2 (THREE-DIMENSIONAL)

L = 2 TIME INFORMATION #3 (TWO-DIMENSIONAL)

L = 0 TIME INFORMATION #Q (THREE-DIMENSIONAL)

TIME INFORMATION IS NOT SHIFTED

SHIFTED BY 1 TOWARDS FUTURE ALONG TIME AXIS t

SHIFTED BY 2 TOWARDS FUTURE ALONG TIME AXIS t

PART STICKING OUT FROM PRESENT TIME t = T IS NOT USED

PART VACANT AFTER SHIFTING IS FILLED IN WITH IMMEDIATELY PREVIOUS VALUE

# FIG. 8

| CAUSAL RELATIONSHIP PARAMETER | INITIAL VALUE | NUMBER OF PARAMETERS | |
|---|---|---|---|
| $\sigma_q^n$ | 1 | Q × N | CONTINUOUS VALUE |
| $a_{d,q}$ | 1 | D × Q | CONTINUOUS VALUE |
| $L_{d,q}$ | 0 | D × Q | DISCRETE VALUE AS INTEGER EXAMPLE) −2, −1, 0, 1, 2 |

N: NUMBER OF CAUSAL RELATIONSHIP PARAMETERS OF KERNEL
Q: NUMBER OF ITEMS OF STATE INFORMATION
D: NUMBER OF DIMENSION OF OBSERVATION INFORMATION

FIG. 9

DATA ACQUISITION UNIT 10

START

S101 — ACQUIRE X(0:t) AND Y(0:t) FROM TIME-SERIES DATA DB

S102 — DIMENSION CHANGE OF X(0:t)

S103 — NORMALIZATION OF X(0:t) AND Y(0:t)

LEARNING UNIT 20

S104 — INITIALIZE CAUSAL RELATIONSHIP PARAMETER $\theta$

S105 — CALCULATE VARIANCE-COVARIANCE MATRIX $K_\theta$ (X, X')

S106 — CALCULATE OPTIMIZATION FUNCTION E

S107 — UPDATE CAUSAL RELATIONSHIP PARAMETER $\theta$

S108 — STORE CAUSAL RELATIONSHIP PARAMETER IN DB

RETURN

# FIG. 10

# FIG. 11

# FIG. 12

STATE INFORMATION #1    OBSERVATION INFORMATION #2

$w$ ⟶ $x$

$a_{d,q}^1$    STATE
INFORMATION #2

$L_{d,q}^1$    $x$ ⟶ $y$    OBSERVATION INFORMATION #3

$a_{d,q}^2$

$L_{d,q}^2$    STATE INFORMATION #3

$y$ ⟶ $z$

$a_{d,q}^3$

$L_{d,q}^3$

# FIG. 13A

## BEFORE REARRANGEMENT

MOVED TO UPPER LEVEL

STATE INFORMATION

OBSERVATION INFORMATION

STATE INFORMATION

OBSERVATION INFORMATION

. STATE INFORMATION

OBSERVATION INFORMATION

MOVED TO UPPER LEVEL

# FIG. 13B

## AFTER REARRANGEMENT

OBSERVATION INFORMATION

STATE INFORMATION

OBSERVATION INFORMATION

STATE INFORMATION

OBSERVATION INFORMATION

EP 4 510 048 A1

## FIG. 14A

## FIG. 14B

## FIG. 15A

SPURIOUS CORRELATION

## FIG. 15B

INDEPENDENCE

DELETED

FIG. 16

**START**

**CAUSAL GRAPH CONSTRUCTION UNIT 32**

S201 — READ IN CAUSAL RELATIONSHIP PARAMETER

S202 — ARRANGE IN ORDER OF STATE –> OBSERVATION

S203 — CORRECT CAUSAL DIRECTION

S204 — REARRANGEMENT

**DATA ACQUISITION UNIT 40**

S205 — ACQUIRE GRANGER CAUSALITY VERIFICATION DATA FROM TIME-SERIES DATA DB

S206 — DIMENSION CHANGE OF VERIFICATION DATA

S207 — NORMALIZATION OF VERIFICATION DATA

**CAUSAL GRAPH VERIFICATION UNIT 34**

S208 — VERIFICATION BY USE OF GRANGER CAUSALITY

**DATA ACQUISITION UNIT 40**

S209 — ACQUIRE DATA FOR VERIFICATION BY USE OF SPURIOUS CORRELATION FROM TIME-SERIES DATA DB

S210 — DIMENSION CHANGE OF VERIFICATION DATA

S211 — NORMALIZATION OF VERIFICATION DATA

**CAUSAL GRAPH VERIFICATION UNIT 34**

S212 — VERIFICATION OF CAUSAL RELATIONSHIP BY USE OF SPURIOUS CORRELATION

**RETURN**

## FIG. 17A

LEARNING UNIT: GENERATE LEARNED MODEL BY PERFORMING MULTITASK LEARNING ON CONGESTION INFORMATION REGARDING STATION A1, STATION A2 AND STATION A3 IN THE PAST

## FIG. 17B

INFERENCE UNIT: PREDICT UNOBSERVED CONGESTION INFORMATION REGARDING STATION A3 FROM DATA OF STATION A1 AND STATION A2 BY USING LEARNED MODEL

## FIG. 18

KERNEL SWITCHES $k_1 \rightarrow k_2$ AT 0

- CPK (Change Points Kernel)

$$K = cov(f(x), f(x'))$$
$$= k_1(x, x') \cdot \bar{\sigma}(x, x') + k_2(x, x') \cdot \sigma(x, x')$$

<div align="center">

### INTERNATIONAL SEARCH REPORT

</div>

| | International application No. |
|---|---|
| | **PCT/JP2022/020680** |

| | |
|---|---|
| **A. CLASSIFICATION OF SUBJECT MATTER** | |
| *G06N 20/00*(2019.01)i; *G06N 99/00*(2019.01)i<br>FI: G06N20/00 130; G06N99/00 180 | |
| According to International Patent Classification (IPC) or to both national classification and IPC | |

| **B. FIELDS SEARCHED** |
|---|
| Minimum documentation searched (classification system followed by classification symbols)<br>G06N20/00; G06N99/00 |
| Documentation searched other than minimum documentation to the extent that such documents are included in the fields searched<br><br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

| **C. DOCUMENTS CONSIDERED TO BE RELEVANT** | | |
|---|---|---|
| Category* | Citation of document, with indication, where appropriate, of the relevant passages | Relevant to claim No. |
| A | JP 2019-57198 A (KOBE STEEL LTD) 11 April 2019 (2019-04-11)<br>entire text, all drawings | 1-12 |
| A | JP 2022-54018 A (GS YUASA CORP) 06 April 2022 (2022-04-06)<br>entire text, all drawings | 1-12 |
| A | US 2020/0241171 A1 (THE CLIMATE CORPORATION) 30 July 2020 (2020-07-30)<br>entire text, all drawings | 1-12 |
| A | 小堀　良行, 共分散構造解析に基づく音の関数分解と合成, 電子情報通信学会技術研究報告, 23 June 2011, vol. 111, no. 106, pp. 107-112, ISSN: 0913-5685<br>entire text, (KOBORI, Yoshiyuki. Function resolution and synthesis of sound by Covariance Structure Analysis. IEICE Technical Report.) | 1-12 |
| A | FUKUMIZU, Kenji et al. Dimensionality Reduction for Supervised Learning with Reproducing Kernel Hilbert Spaces. The Journal of Machine Learning Research. January 2004 [retrieved on 01 August 2022], vol. 5, pp. 73-99, Retrieved from the Internet: <URL: http://www.jmlr.org/papers/volume5/fukumizu04a/fukumizu04a.pdf>, ISSN: 1532-4435<br>entire text | 1-12 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2022/020680**

| Patent document cited in search report | | | Publication date (day/month/year) | Patent family member(s) | | | Publication date (day/month/year) |
|---|---|---|---|---|---|---|---|
| JP | 2019-57198 | A | 11 April 2019 | WO | 2019/058905 | A1 | |
| | | | | entire text, all drawings | | | |
| JP | 2022-54018 | A | 06 April 2022 | (Family: none) | | | |
| US | 2020/0241171 | A1 | 30 July 2020 | WO | 2017/196756 | A1 | |
| | | | | CA | 3023513 | A1 | |
| | | | | BR | 112018073278-8 | A8 | |

Form PCT/ISA/210 (patent family annex) (January 2015)

**REFERENCES CITED IN THE DESCRIPTION**

**Patent documents cited in the description**

- JP 2017228256 A

**Non-patent literature cited in the description**

- **JACK M. WANG** ; **DAVID J. FLEET** ; **AARON HERTZMANN**. Gaussian Process Dynamical Models. *Proceedings of the 18th International Conference on Neural Information Processing Systems*, December 2005, 1441-1448

- **EDWIN V. BONILLA** ; **KIAN MING A. CHAI** ; **CHRISTOPHER K.I. WILLIAMS**. Multi-task Gaussian Process Prediction. *Proceedings of the Advances in Neural Information Processing Systems*, 2008, vol. 20